# EUROPEAN PATENT SPECIFICATION

(11) **EP 4 275 986 B1**
(45) Date of publication and mention of the grant of the patent: **12.08.2026**
(21) Application number: 21917214.5
(22) Date of filing: 26.11.2021
(51) Int. Cl.: B61F 5/52, B61F 5/10, B61F 5/24, B61F 5/30, B61F 3/02, B61F 5/12

(54) **FRAME, BOGIE, AND RAIL VEHICLE**
RAHMEN, DREHGESTELL UND SCHIENENFAHRZEUG
CADRE, BOGIE ET VÉHICULE FERROVIAIRE

(30) Priority: 05.01.2021 CN 202110007455
(43) Date of publication of application: 15.11.2023
(73) Proprietor: CRRC TANGSHAN CO., LTD., Fengrun District Tangshan Hebei 063035 (CN)
(72) Inventor: WANG, Jiaxin, Tangshan Hebei 063035 (CN); ZHANG, Hanchen, Tangshan Hebei 063035 (CN); ZHENG, Jianke, Tangshan Hebei 063035 (CN); ZHANG, Lijun, Tangshan Hebei 063035 (CN); DUAN, Zebin, Tangshan Hebei 063035 (CN); HAO, Taoguang, Tangshan Hebei 063035 (CN)
(74) Representative: dompatent
(86) International application number: PCT/CN2021/133416
(87) International publication number: WO 2022/148173

(56) References cited:
- WO-A1-2016/173791
- CN-A- 102 923 153
- CN-A- 107 336 720
- CN-A- 108 032 864
- CN-A- 108 032 864
- CN-A- 108 045 390
- CN-A- 108 045 390
- CN-A- 111 891 150
- CN-A- 112 622 971
- CN-U- 204 605 832
- JP-A- 2017 081 308

## Description

### TECHNICAL FIELD

The present disclosure relates to railway vehicle manufacturing technology, and more particularly to a frame, a bogie, and a railway vehicle.

### BACKGROUND

The bogie, which is disposed between the car body and the rail, is one of the most important components of the railway vehicle. The main functions of the bogie are: supporting the car body, bearing and transmitting various loads and forces from the car body to the wheels or from the wheel-rail to the car body, ensuring the safe operation of vehicles to flexibly run along straight rails and smoothly pass through curves, and alleviating the interaction between the vehicle and wheel-rail to reduce vibration and impact, and improve the stability and safety of the vehicle operation. According to the arranged position of the shaft box, the bogie can be defined as the external shaft box bogie and the internal shaft box bogie.

In the related technical solution, the internal shaft box bogie includes a wheelset, a shaft box, and a frame, wherein the frame includes two corresponding sidebeams and a crossbeam connecting the two sidebeams, the wheelset includes a shaft and wheels disposed at two ends of the shaft, the shaft box is disposed on the shaft and inside the two wheels, and the wheelset and the sidebeams of the frame are connected by the shaft box. The internal shaft box bogie can shorten the lengths of the shaft and the crossbeam of the frame, which is beneficial to reduce the weight of the frame and the wheelset, reduce the mass of the bogie, improve the operation quality of the vehicle, reduce the wheel-rail force, and make the bogie design more compact.

However, with the related technical solution, the span distance between the secondary suspension on the bogie is small due to the shortening of the length of the crossbeam of the frame, and the anti-roll ability of the bogie is poor.

CN108032864A discloses a longitudinal-drive bogie with built-in axle boxes including a frame (3) and axle boxes (12); the frame is formed by connecting two side beams (20) and first and second cross beams (23 and 26), both the frame and the axle boxes are arranged within wheels (1), the two side beams are a traction motor (13) is mounted on each side beam through a motor hanger (21), output shafts of the two traction motors are perpendicular to axles (2), output shafts of the two traction motors are connected with the axles through couplings (16) and gearboxes (17), and the two traction motors are positioned between the first and second cross beams (23 and 26); only one flange brake disc (18) is arranged on one axle and is fitted to a brake caliper (9) on the frame; a traction block (22) is arranged on the first cross beam, the first cross beam is fixedly connected with one end of a traction pull bar through the traction block (22), and the other end of the traction pull bar is fixed to a vehicle body.

CN108045390A discloses a bogie with internally-arranged axle boxes for a broad-gauge subway vehicle. The internally-arranged axle box structures are adopted; first hanging devices adopt quasi-rotary-arm-type positioning, spiral steel spring sets and rotary arm positioning rubber joints are symmetrically arranged on the two sides of axle box bodies, and stiffness matching is conducted through the rotary arm positioning rubber joints; second hanging devices comprise air springs, vertical vibration reducers, horizontal vibration reducers, side-rolling prevention torsion bars and the like, thus vibration and impact are reduced, and taking comfort is improved; basic braking devices comprise axle-mounted disc-type braking units and are arranged on the outer sides of wheels; a traction motor is fully suspended, and gear transmission is two-stage decelerating transmission; and adapters are mounted at the axle ends for providing mounting interfaces for speed sensors. The problem that a bogie cannot be provided with a current collector due to the 1676 mm wide gauge of an Indian subway and the excessively-small distance between a third rail and a running rail is solved; the torsion stiffness of the bogie and the horizontal span of the first hanging devices on the left and right sides are reduced, and the curve negotiating property is improved; and the structure is compact, the function is complete, and safe operation of the vehicle can be ensured.

CN102923153A discloses a bogie of a high-speed motor train unit. By adopting a brand-new bogie structure and a hanging connection and traction mode, overall lightweight design is realized, the unsprung weight of the bogie is reduced, and the hanging parameter between the bogie and a body is optimized. On the basis that the high-speed running speed is met, stability when the bogie passes through a big corner and good traction and braking performance are expected. The bogie comprises a framework, two groups of wheel set travelling devices, a linear motor, a first hanging device, a second hanging device, a traction device and a foundation brake device. The framework comprises a pair of side beam assemblies and a pair of cross beam assemblies which are connected with each other; each side beam assembly has a hollow box body structure, and comprises a pair of upper and lower cover plates and a pair of lateral web plates which are welded; each cross beam assembly comprises a pair of hollow steel pipes penetrating the lateral web plates and welded with the lateral web plates; and a pair of air spring supporting beams is welded at two ends of a steel pipe and outside the lateral web plates.

WO2016173791A1 relates to a device for securing braking devices to a chassis frame of a rail vehicle, including a crossmember (1) of the chassis frame having a longitudinal axis (7), and at least two securing points (10, 11) for braking devices, wherein the securing points (10, 11) are spaced apart from the crossmember (1) in a longitudinal direction (8) which lies normal to the longitudinal axis (7). According to the invention, in order to reduce the weight and so as not to simultaneously increase the warp stiffness of the chassis frame, at least one respective securing point (10, 11) is arranged at the end on a continuous brake carrier (12), which brake carrier (12) has an open cross section, wherein the connection means (13) are provided, via which the brake carrier (12) is both connected to the crossmember (1) and is spaced apart from the crossmember (1) in a vertical direction (9).

### SUMMARY

The embodiment of the present disclosure provides a frame, a bogie and a railway vehicle, which are mainly to solve the problems of small span distance between the secondary suspension on the bogie and poor anti-roll ability in the related technology.

A first aspect of an embodiment of the present disclosure provides a frame according to claim 1.

In the frame described above, optionally, the side of the extension beam away from the crossbeam is provided with an anti-yaw damper mounting seat to mount an anti-yaw damper.

In the frame described above, optionally, the side of the extension beam away from the crossbeam is further provided with an anti-roll torsion bar mounting seat, and the two anti-roll torsion bar mounting seats on the two extension beams are respectively employed to mount two ends of an anti-roll torsion bar.

In the frame described above, optionally, the sidebeam is provided with a secondary transverse vibration damper mounting seat located between the two first crossbeams and employed to mount a secondary transverse vibration damper.

In the frame described above, optionally, the sidebeam is further provided with a transverse stopper mounting seat disposed close to the secondary transverse vibration damper mounting seat, located between the two first crossbeams and employed to mount a transverse stopper.

In the frame described above, optionally, the first crossbeam is provided with a traction mounting seat employed to mount a traction device.

In the frame described above, optionally, two ends of the sidebeam are further provided with a primary suspension mounting seat to connect to a primary suspension.

A second aspect of an embodiment of the present disclosure provides a bogie according to claim 8.

In the bogie described above, optionally, the secondary suspension comprises a secondary spring being an air spring.

The bogie described above, optionally, further comprises:
a wheelset comprising a shaft and two wheels fixed at two ends of the shaft; and
a shaft box disposed at two ends of the shaft and between the two wheels, and the sidebeam being connected to the wheelset and the shaft box by the primary suspension.

In the bogie described above, optionally, the primary suspension comprises a primary spring and a primary vertical vibration damper.

In the bogie described above, optionally, a positioning pulling board is further disposed between the shaft box and the frame, the cross section of the positioning pulling board is triangular, and one end of the positioning pulling board is fixedly connected to the shaft box by a rubber joint, and the other end of the positioning pulling board is fixedly connected to the frame by a rubber joint.

A third aspect of an embodiment of the present disclosure provides a railway vehicle according to claim 12.

With the frame, the bogie, and the railway vehicle according to the embodiment of the present disclosure, the frame comprises two sidebeams, at least one crossbeam, and two extension beams, and the two sidebeams are disposed correspondingly. The crossbeam is connected to two sidebeams. The two extension beams are respectively disposed on the sides of the two sidebeams away from the crossbeam, and the two extension beams are coaxially disposed. The extension beams are provided with secondary suspension mounting seats for connecting the secondary suspension. The embodiment of the present disclosure provides the extension beam on the side of the sidebeam away from the crossbeam and the secondary suspension mounting seat on the extension beam, which improves the span distance between two secondary suspensions on the bogie and the anti-roll ability of the bogie.

### BRIEF DESCRIPTION OF THE DRAWINGS

The drawings illustrated herein serve to provide a further understanding of and constitute a part of this present disclosure, and the illustrative embodiments of this present disclosure and the description thereof are used to explain this present disclosure and are not unduly limiting. In the drawings:
Fig. 1 is a structural view of a frame provided by an embodiment of the present disclosure.
Fig. 2 is a structural view of a bogie provided by the embodiment of the present disclosure.
Fig. 3 is a structural view of the bogie provided by the embodiment of the present disclosure, without a bolster beam.
Fig. 4 is a structural view of a wheelset and a shaft box provided by the embodiment of the present disclosure.

### REFERENCES IN THE DRAWINGS:

100-frame; 110-sidebeam; 111-secondary transverse vibration damper mounting seat; 112-transverse stopper mounting seat; 121-first crossbeam; 1211-traction mounting seat; 122-second crossbeam; 1221-wheel-brake hanging bracket; 1222-shaft-brake hanging bracket; 113-primary suspension mounting seat; 130-extension beam; 131-anti-yaw damper mounting seat; 132-anti-roll torsion bar mounting seat;
200-secondary suspension;
300-bolster beam;
400-central traction device;
500-wheelset; 510-shaft; 511-shaft-brake device; 520-wheels;
600-shaft box;
700-positioning pulling board;
810-anti-yaw damper; 820-anti-roll torsion bar.

### DETAILED DESCRIPTION OF THE EMBODIMENTS

In order to clarify the technical solutions and advantages of the embodiments of the present disclosure, the following further detailed description of the exemplary embodiments of the present disclosure is given in conjunction with the accompanying drawings, and it is apparent that the described embodiments are only a part of the embodiments of the present disclosure, and are not exhaustive of all embodiments. It should be noted that the embodiments in the present disclosure and the features in the embodiments can be combined with each other without conflict.

### Embodiment 1

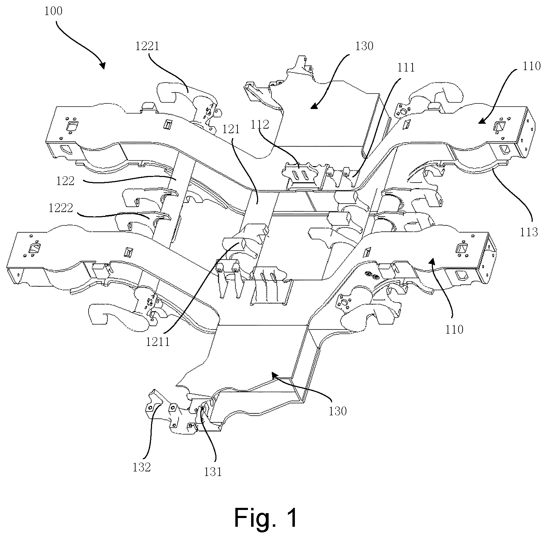

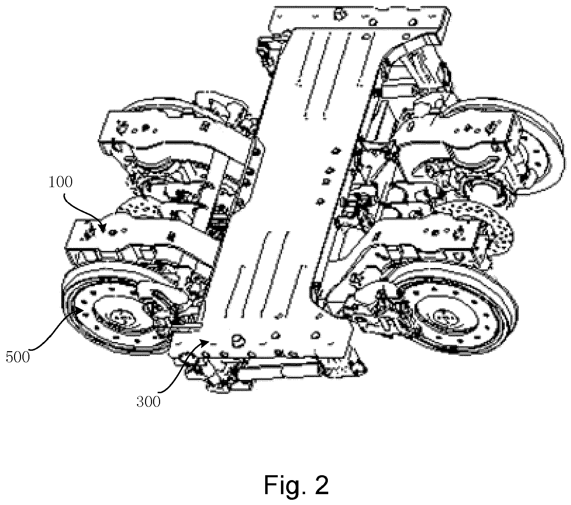

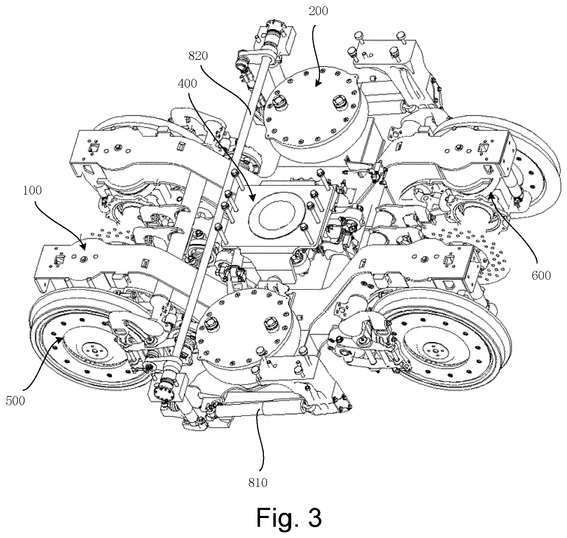

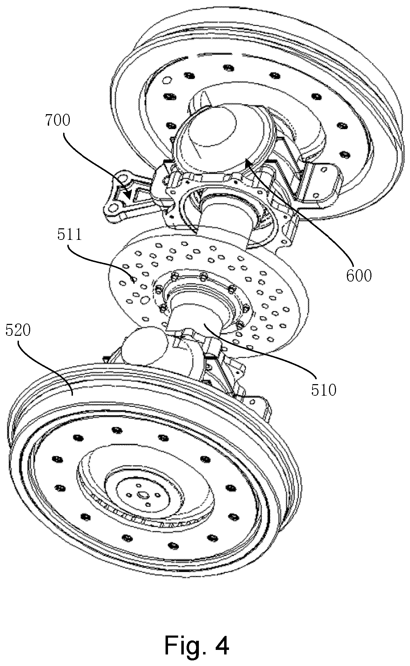

Fig. 1 is a structural view of the bogie provided by the embodiment of the present disclosure. Fig. 2 is a structural view of the bogie provided by the embodiment of the present disclosure. Fig. 3 is a structural view of the bogie provided by the embodiment of the present disclosure, without a bolster beam. Fig. 4 is a structural view of a wheelset and a shaft box provided by the embodiment of the present disclosure. Please refer to Figs. 1 to 4.

The present embodiment provides a frame 100 and a bogie comprising the frame 100.

The frame 100 comprises:
two sidebeams 110 disposed corresponding to each other;
at least one crossbeam connecting the two sidebeams 110; and
two extension beams 130 respectively disposed on the side of the two sidebeams 110 away from the crossbeams and coaxially disposed. The extension beams 130 are provided with secondary suspension mounting seats (not shown) to connect the secondary suspensions 200.

Specifically, in the frame 100 of the embodiment, the sidebeams 110 and the crossbeam are substantially assembled in an "H" shape. The sidebeams 110 can be welded into the box structure by weathering structural steel plate, and the crossbeams can be assembled and welded with seamless steel tubes. The frame 100 has equal stiffness and equal strength design in structure, and with the new structure, the manufacturing process is simple.

The present embodiment increases the transverse width of the frame 100 by providing the extension beam 130 on the side of the sidebeam 110 away from the crossbeam. Moreover, a secondary suspension mounting seat is disposed on the extension beam 130, which is beneficial to improving the span distance between two secondary suspensions 200 on the bogie, thereby improving the anti-roll ability of the bogie and reducing the pressure of the anti-roll torsion bar.

Furthermore, the side of the extension beam 130 away from the crossbeam of the embodiment is provided with an anti-yaw damper mounting seat 131 for mounting an anti-yaw damper 810. One end of the anti-yaw damper 810 is connected to the anti-yaw damper mounting seat 131, and the other end is connected to the bolster beam 300 or the car body. During the operation of the vehicle, the vehicle will always have a serpentine motion. The anti-yaw damper 810 is used to prevent the serpentine motion from being too large and keep the serpentine motion in a certain stable range. One anti-yaw damper 810 is arranged on each side of the bogie to attenuate the sine wave motion of the vehicle.

The side of the extension beam 130 away from the crossbeam is further provided with anti-roll torsion bar mounting seats 132, and the anti-roll torsion bar mounting seats 132 on the two extension beams 130 are respectively employed to mount two ends of the anti-roll torsion bar 820. A mating mounting seat corresponding to the anti-roll torsion bar mounting seat 132 is provided on the bolster beam 300 or the car body, and the anti-roll torsion bar 820 is mounted by the anti-roll torsion bar mounting seat 132 and the mating mounting seat. The torsion bar material of the anti-roll torsion bar 820 can be selected as 52CrMoV4-EN10089, and the corresponding torsion arm material can be selected as 42CrMoV4-EN10083-3. In a case where the vehicle rolls during operation, the torsion arm drives the torsion bar to twist, and the torsion bar can provide reverse torsional force to prevent the rolling trend of the car body and keep the car body stable.

The crossbeam of the embodiment comprises two first crossbeams 121 and two second crossbeams 122, the two first crossbeams 121 are located between the two second crossbeams 122, and two ends of the extension beam 130 in the extending direction of the sidebeam 110 are respectively corresponding to the first crossbeams 121.

The sidebeam 110 is provided with a secondary transverse vibration damper mounting seat 111 located between the two first crossbeams 121 and employed to mount a secondary transverse vibration damper. Two ends of the secondary transverse vibration dampers are respectively mounted on the secondary transverse vibration damper mounting seat 111 and the transverse vibration damper mounting seat on the bolster beam 300, for transverse vibration damping of relative operation between the frame 100, the bolster beam 300 and the car body.

The sidebeam 110 is further provided with a transverse stopper mounting seat 112 disposed close to the secondary transverse vibration damper mounting seat, located between the two first crossbeams 121 and employed to mount a transverse stopper. The transverse stopper is employed to limit the position between the central traction device 400 and the frame 100 during traction. The transverse stopper can be made of metal rubber parts. In a case where the transverse movement between the car body and the frame 100 has a large displacement, the transverse stopper can limit the transverse swing of the car body, improve the stability and prevent the equipment on the vehicle from exceeding the limitation.

The first crossbeam 121 is provided with a traction mounting seat 1211 for mounting a traction device. The traction mounting seat 1211 is a joint for mounting two traction rods of the central traction device 400, which can effectively transmit traction force and braking force and better adapt to the relative movement between the car body and the frame.

The two ends of the second crossbeam 122 are protruded from the sidebeam 110, and the second crossbeam 122 is provided with a brake hanging bracket comprising a wheel-brake hanging bracket 1221 disposed at two ends of the second crossbeam 122 and a shaft-brake hanging bracket 1222 disposed in the middle of the second crossbeam 122, wherein the wheel-brake hanging bracket 1221 is employed to mount a wheel-brake device, and the shaft-brake hanging bracket 1222 is employed to mount a shaft-brake device. The wheel-brake device is disposed at two ends of the shaft 510, and the shaft-brake device is disposed at the middle of the shaft 510. During braking, the two ends and the middle of the shaft 510 are born the forces, thus improving the braking force of the bogie, avoiding the load eccentricity, and making the forcing condition of the shaft 510 better.

The primary suspension mounting seats 113 are further provided at two ends of the sidebeam 110, and the primary suspension mounting seats 113 are employed to connect the primary suspension.

The bogie of the present embodiment comprises a frame 100 as described above and a secondary suspension 200. One end of the secondary suspension 200 is connected to the secondary suspension mounting seat, and the other end of the secondary suspension 200 is connected to the car body.

The bogie of the embodiment further comprises a bolster beam 300 and a central traction device 400 disposed in the middle of the crossbeam, the central traction device 400 is connected to the middle of the bolster beam 300, and the two ends of the bolster beam 300 are connected to the secondary suspension 200. The bolster beam 300 is an important component of the bogie. The bolster beam 300 is employed to connect with the car body, and the bogie with the bolster beam 300 can be an independent component, which is convenient for the replacement and maintenance of the bogie. One end of the central traction device 400 is connected to the mounting seat on the traction beam by a rubber joint, and the other end is connected to the traction mounting seat 1211 on the frame 100 by a rubber joint. The rubber joints at two ends can provide sufficient strength during pushing or pulling, have less resistance during torsion, be capable of moving freely, and better adapt to the relative movement between the car body and the frame 100 while effectively transmitting traction force and braking force.

The secondary suspension 200 of the present embodiment comprises a secondary spring which is an air spring, and the secondary suspension 200 can provide secondary vertical damping and transverse damping to improve the mechanical performance of the vehicle.

The bogie of the embodiment further comprises:
a wheelset 500 comprising a shaft 510 and two wheels 520 fixed at two ends of the shaft 510. In order to increase the operation speed of the bogie, the present embodiment can be realized by increasing the weight of the shaft 510 and selecting a bearing with a larger diameter. A shaft-brake device 511 is provided in the middle of the shaft 510, and a wheel-brake device is provided on the wheels 520.

The bogie of the embodiment further comprises a shaft box 600 provided at two ends of the shaft 510 and between two wheels 520, that is, the bogie of the present embodiment is an internal shaft box bogie, and the sidebeam 110 is connected to the shaft box 600 and the wheelset 500 by a primary suspension.

The primary suspension of the embodiment comprises a primary spring and a primary vertical vibration damper. The primary spring can be a spiral steel spring disposed in the middle of the shaft box 600 and supported on the frame 100. The spiral steel spring can increase the vertical static deflection of the primary suspension, so that the bogie can bear more load. The primary vertical vibration damper is in conjunction with the spiral steel spring in the primary suspension device, and the primary vertical vibration damper is employed to absorb the vertical motion energy between the frame 100 and the wheelset 500, so that the vertical vibration can converge rapidly.

In the embodiment, a positioning pulling board 700 is further disposed between the shaft box 600 and the frame 100. The cross section of the positioning pulling board 700 is triangular. One end of the positioning pulling board 700 is fixedly connected to the shaft box 600 by a rubber joint, and the other end is fixedly connected to the frame 100 by a rubber joint. During the operation of the vehicle, the positioning pulling board 700 can provide rigidity for positioning the wheelset 500, and the two rubber joints can provide a small amount of displacement and energy for reducing vibration. Compared with the solution of providing a straight rod between the shaft box and the frame in the related art, the triangular positioning pulling board 700 provides one more connection point, which makes the connecting and positioning more stable.

Since the frame 100 is provided in the bogie of the embodiment, the span distance between the two secondary suspensions on the bogie is larger, thereby improving the anti-roll capability of the bogie and reducing the pressure of the anti-roll torsion bar.

### Embodiment 2

The embodiment provides a railway vehicle comprising a car body and a bogie as described, and the car body is disposed on the bogie.

Since the bogie is provided in the railway vehicle of the embodiment, the span distance between the two secondary suspensions on the bogie is larger, thereby improving the anti-roll capability of the bogie and reducing the pressure of the anti-roll torsion bar.

In the description of the present disclosure, It should be understood that the terms "middle", "longitudinal", "transverse", "length", "width", "thickness", "up", "down", "front", "back", "left", "right", "vertical", "horizontal", "top", "bottom", "internal", "external" and the like denote an orientation or positional relationship based on those shown in the drawings and are intended for ease of description and simplification of the description only, and are not intended to indicate or imply that the device or element in question must have a particular orientation, be constructed and operate in a particular orientation and therefore cannot be construed as limiting to the present disclosure.

Furthermore, the terms "first" and "second" are used for descriptive purposes only and cannot be understood as indicating or implying relative importance or implying the number of technical features indicated. Thus, an element defined as "first", or "second" may explicitly or implicitly include one or more of such elements. In the description of this application, "a plurality of" means at least two, e.g. two, three, etc. unless expressly specified otherwise.

In the present disclosure, the terms "arranged", "connected", " in conjunction with", "fixed", etc. are to be understood in a broad sense. For example, the connection can be directly connected or indirectly connected by intermediate media, and it can be the internal communication of two elements or the interaction between two elements. The specific meanings of the above terms in the present disclosure may be understood on a case-by-case basis to those of ordinary skill in the art.

It will be appreciated by persons skilled in the art that numerous variations and/or modifications may be made to the invention as long as they fall under the scope of the appended claims.

## Claims

1. A frame (100), comprising:
two sidebeams (110) disposed corresponding to each other;
at least one crossbeam connecting the two sidebeams (110); and
two extension beams (130) respectively disposed on the side of the two sidebeams (110) away from the crossbeams and coaxially disposed with the two sidebeams (110), wherein the extension beams (130) are provided with secondary suspension mounting seats to connect the secondary suspensions;
wherein the crossbeam comprises two first crossbeams (121) and two second crossbeams (122), the two first crossbeams (121) are located between the two second crossbeams (122), and two ends of each extension beam (130) along an extending direction of the corresponding sidebeam (110) are respectively corresponding to the two first crossbeams (121);
**characterized in that**
two ends of the second crossbeam (122) are protruded from the sidebeams (110), and
the second crossbeam (122) is provided with a brake hanging bracket comprising a wheel-brake hanging bracket (1221) disposed at two ends of the second crossbeam (122) and a shaft-brake hanging bracket (1222) disposed in the middle of the second crossbeam (122), wherein the wheel-brake hanging bracket (1221) is employed to mount a wheel-brake device, and the shaft-brake hanging bracket (1222) is employed to mount a shaft-brake device (511).

2. The frame (100) according to claim 1, wherein the side of the extension beam (130) away from the crossbeam is provided with an anti-yaw damper mounting seat (131) to mount an anti-yaw damper (810).

3. The frame (100) according to claim 2, wherein the side of the extension beam (130) away from the crossbeam is further provided with an anti-roll torsion bar mounting seat (132), and the two anti-roll torsion bar mounting seats (132) on the two extension beams (130) are respectively employed to mount two ends of an anti-roll torsion bar (820).

4. The frame (100) according to claim 1, wherein, the sidebeam (110) is provided with a secondary transverse vibration damper mounting seat (111) located between the two first crossbeams (121) and employed to mount a secondary transverse vibration damper.

5. The frame (100) according to claim 4, wherein the sidebeam (110) is further provided with a transverse stopper mounting seat (112) disposed close to the secondary transverse vibration damper mounting seat (111), located between the two first crossbeams (121) and employed to mount a transverse stopper.

6. The frame (100) according to claim 5, wherein the first crossbeam (121) is provided with a traction mounting seat (1211) employed to mount a traction device.

7. The frame (100) according to claim 6, wherein two ends of the sidebeam (110) are further provided with a primary suspension mounting seat (113) to connect to a primary suspension.

8. A bogie, comprising: the frame (100) of any one of claims 1-7;
a secondary suspension (200), one end of the secondary suspension (200) connected to the secondary suspension mounting seat of the frame (100), and the other end of the secondary suspension (200) connectable to the car body; and
a bolster beam (300), wherein the middle of the crossbeam is provided with a central traction device (400), and the middle of the bolster beam (300) is connected to the central traction device (400);
wherein two ends of the bolster beam (300) are connected to the secondary suspension (200).

9. The bogie according to claim 8, wherein the secondary suspension (200) comprises a secondary spring being an air spring.

10. The bogie according to claim 9, further comprising:
a wheelset (500) comprising a shaft (510) and two wheels (520) fixed at two ends of the shaft (510); and
a shaft box (600) disposed at two ends of the shaft (510) and between the two wheels (520), and the sidebeam (110) being connected to the wheelset (500) and the shaft box (600) by the primary suspension.

11. The bogie according to claim10, wherein a positioning pulling board (700) is further disposed between the shaft box (600) and the frame (100), the cross section of the positioning pulling board (700) is triangular, one end of the positioning pulling board (700) is fixedly connected to the shaft box (600) by a rubber joint, and the other end of the positioning pulling board (700) is fixedly connected to the frame (100) by a rubber joint.

12. A railway vehicle, comprising a car body and the bogie according to any one of claims 8-11, the car body being disposed on the bogie.

## Patentansprüche

1. Rahmen (100), der aufweist:
zwei Seitenträger (110), die einander entsprechend angeordnet sind;
mindestens ein Querträger, der die beiden Seitenträger (110) verbindet; und zwei Verlängerungsträger (130), die jeweils auf der von den Querträgern entfernten Seite der beiden Seitenträger (110) angeordnet und koaxial zu den beiden Seitenträgern (110) angeordnet sind, wobei die Verlängerungsträger (130) mit Sekundäraufhängungsmontagesitzen versehen sind, um die Sekundäraufhängungen anzuschließen;
wobei
der Querträger zwei erste Querträger (121) und zwei zweite Querträger (122) aufweist, die beiden ersten Querträger (121) sich zwischen den beiden zweiten Querträgern (122) befinden, und die beiden Enden jedes Verlängerungsträgers (130) entlang einer Erstreckungsrichtung des entsprechenden Seitenträgers (110) jeweils den beiden ersten Querträgern (121) entsprechen;
**dadurch gekennzeichnet, dass**
die beiden Enden des zweiten Querträgers (122) aus den Seitenträgern (110) herausragen und der zweite Querträger (122) mit einem Bremsenaufhängebügel versehen ist, der einen an den beiden Enden des zweiten Querträgers (122) angeordneten Radbremsenaufhängebügel (1221) und einen in der Mitte des zweiten Querträgers (122) angeordneten Wellenbremsenaufhängebügel (1222) aufweist, wobei der Radbremsenaufhängebügel (1221) zur Montage einer Radbremsenvorrichtung eingesetzt wird und der Wellenbremsenaufhängebügel (1222) zur Montage einer Wellenbremsenvorrichtung (511) eingesetzt wird.

2. Rahmen (100) nach Anspruch 1, wobei die vom Querträger entfernte Seite des Verlängerungsträgers (130) mit einem Anti-Gierdämpfer-Montagesitz (131) zur Montage eines Anti-Gierdämpfers (810) versehen ist.

3. Rahmen (100) nach Anspruch 2, wobei die vom Querträger entfernte Seite des Verlängerungsträgers (130) ferner mit einem Anti-Roll-Torsionsstab-Montagesitz (132) versehen ist und die beiden Anti-Roll-Torsionsstab-Montagesitze (132) an den beiden Verlängerungsträgern (130) jeweils zur Montage von zwei Enden eines Anti-Roll-Torsionsstabs (820) eingesetzt werden.

4. Rahmen (100) nach Anspruch 1, wobei der Seitenträger (110) mit Sekundärquerschwingungsdämpfer-Montagesitz (111) versehen ist, der sich zwischen den beiden ersten Querträgern (121) befindet und zur Montage eines sekundären Querschwingungsdämpfers eingesetzt wird.

5. Rahmen (100) nach Anspruch 4, wobei der Seitenträger (110) ferner mit einem Queranschlag-Montagesitz (112) versehen ist, der in der Nähe des Sekundärquerschwingungsdämpfer-Montagesitzes (111) angeordnet ist, sich zwischen den beiden ersten Querträgern (121) befindet und zur Montage eines Queranschlags eingesetzt wird.

6. Rahmen (100) nach Anspruch 5, wobei der erste Querträger (121) mit einem Zugmontagesitz (1211) versehen ist, der zur Montage einer Zugvorrichtung eingesetzt wird.

7. Rahmen (100) nach Anspruch 6, wobei die beiden Enden des Seitenträgers (110) ferner mit einem Primäraufhängungsmontagesitz (113) zur Verbindung mit einer Primäraufhängung versehen sind.

8. Drehgestell, das aufweist: den Rahmen (100) nach einem der Ansprüche 1 bis 7;
eine Sekundäraufhängung (200), wobei ein Ende der Sekundäraufhängung (200) mit dem Sekundäraufhängungsmontagesitz des Rahmens (100) verbunden ist und das andere Ende der Sekundäraufhängung (200) mit der Karosserie verbunden werden kann; und
einen Stützträger (300), wobei die Mitte des Querträgers mit einer zentralen Zugvorrichtung (400) versehen ist und die Mitte des Stützträgers (300) mit der zentralen Zugvorrichtung (400) verbunden ist;
wobei die beiden Enden des Stützträgers (300) mit der Sekundäraufhängung (200) verbunden sind.

9. Drehgestell nach Anspruch 8, wobei die Sekundäraufhängung (200) eine Sekundärfeder aufweist, bei der es sich um eine Luftfeder handelt.

10. Drehgestell nach Anspruch 9, das ferner aufweist:
einen Radsatz (500), der eine Welle (510) und zwei Räder (520) aufweist, die an den beiden Enden der Welle (510) befestigt sind; und
einen Wellenkasten (600), der an beiden Enden der Welle (510) und zwischen den beiden Rädern (520) angeordnet ist, und wobei der Seitenträger (110) über die Primäraufhängung mit dem Radsatz (500) und dem Wellenkasten (600) verbunden ist.

11. Drehgestell nach Anspruch 10, wobei zwischen dem Wellenkasten (600) und dem Rahmen (100) ferner eine Positionierungszugplatte (700) angeordnet ist, der Querschnitt der Positionierungszugplatte (700) dreieckig ist, ein Ende der Positionierungszugplatte (700) über ein Gummigelenk fest mit dem Wellenkasten (600) verbunden ist und das andere Ende der Positionierungszugplatte (700) über ein Gummigelenk fest mit dem Rahmen (100) verbunden ist.

12. Schienenfahrzeug, das eine Karosserie und das Drehgestell nach einem der Ansprüche 8-11 aufweist, wobei die Karosserie auf dem Drehgestell angeordnet ist.

## Revendications

1. Châssis (100), comprenant :
deux longerons (110) disposés en correspondance l'un avec l'autre ;
au moins une traverse reliant les deux longerons (110) ; et
deux poutres d'extension (130) disposées respectivement sur le côté des deux longerons (110) opposé aux traverses et disposées coaxialement avec les deux longerons (110), dans lequel les poutres d'extension (130) sont pourvues de sièges de montage de suspension secondaire pour relier les suspensions secondaires ;
dans lequel la traverse comprend deux premières traverses (121) et deux secondes traverses (122), les deux premières traverses (121) sont situées entre les deux secondes traverses (122), et les deux extrémités de chaque poutre d'extension (130) selon une direction d'extension du longeron correspondant (110) correspondent respectivement aux deux premières traverses (121) ;
**caractérisé en ce que**
les deux extrémités de la seconde traverse (122) font saillie à partir des longerons (110), et
la seconde traverse (122) est pourvue d'un support de suspension de frein comprenant un support de suspension de frein de roue (1221) disposé aux deux extrémités de la seconde traverse (122) et un support de suspension de frein d'essieu (1222) disposé au milieu de la seconde traverse (122), dans lequel le support de suspension de frein de roue (1221) est employé pour monter un dispositif de frein de roue, et le support de suspension de frein d'essieu (1222) est employé pour monter un dispositif de frein d'essieu (511).

2. Châssis (100) selon la revendication 1, dans lequel le côté de la poutre d'extension (130) opposé à la traverse est pourvu d'un siège de montage d'amortisseur anti-lacet (131) pour monter un amortisseur anti-lacet (810).

3. Châssis (100) selon la revendication 2, dans lequel le côté de la poutre d'extension (130) opposé à la traverse est en outre pourvu d'un siège de montage de barre de torsion anti-roulis (132), et les deux sièges de montage de barre de torsion anti-roulis (132) situés sur les deux poutres d'extension (130) sont respectivement employés pour monter deux extrémités d'une barre de torsion anti-roulis (820).

4. Châssis (100) selon la revendication 1, dans lequel le longeron (110) est pourvu d'un siège de montage d'amortisseur de vibrations transversales secondaire (111) situé entre les deux premières traverses (121) et employé pour monter un amortisseur de vibrations transversales secondaire.

5. Châssis (100) selon la revendication 4, dans lequel le longeron (110) est en outre pourvu d'un siège de montage de butée transversale (112) disposé à proximité du siège de montage d'amortisseur de vibrations transversales secondaire (111), situé entre les deux premières traverses (121) et employé pour monter une butée transversale.

6. Châssis (100) selon la revendication 5, dans lequel la première traverse (121) est pourvue d'un siège de montage de traction (1211) employé pour monter un dispositif de traction.

7. Châssis (100) selon la revendication 6, dans lequel les deux extrémités du longeron (110) sont en outre pourvues d'un siège de montage de suspension primaire (113) pour se relier à une suspension primaire.

8. Bogie, comprenant :
le châssis (100) selon l'une quelconque des revendications 1 à 7 ;
une suspension secondaire (200), une extrémité de la suspension secondaire (200) étant reliée au siège de montage de suspension secondaire du châssis (100), et l'autre extrémité de la suspension secondaire (200) étant apte à être reliée à la caisse ; et
une traverse danseuse (300), dans lequel le milieu de la traverse est pourvu d'un dispositif central de traction (400), et le milieu de la traverse danseuse (300) est relié au dispositif central de traction (400) ;
dans lequel les deux extrémités de la traverse danseuse (300) sont reliées à la suspension secondaire (200).

9. Bogie selon la revendication 8, dans lequel la suspension secondaire (200) comprend un ressort secondaire qui est un ressort pneumatique.

10. Bogie selon la revendication 9, comprenant en outre :
un essieu monté (500) comprenant un essieu (510) et deux roues (520) fixées aux deux extrémités de l'essieu (510) ; et
une boîte d'essieu (600) disposée aux deux extrémités de l'essieu (510) et entre les deux roues (520), et le longeron (110) étant relié à l'essieu monté (500) et à la boîte d'essieu (600) par la suspension primaire.

11. Bogie selon la revendication 10, dans lequel une plaque de traction de positionnement (700) est en outre disposée entre la boîte d'essieu (600) et le châssis (100), la section transversale de la plaque de traction de positionnement (700) est triangulaire, une extrémité de la plaque de traction de positionnement (700) est reliée fixement à la boîte d'essieu (600) par une articulation en caoutchouc, et l'autre extrémité de la plaque de traction de positionnement (700) est reliée fixement au châssis (100) par une articulation en caoutchouc.

12. Véhicule ferroviaire, comprenant une caisse et le bogie selon l'une quelconque des revendications 8 à 11, la caisse étant disposée sur le bogie.
